# EUROPÄISCHE PATENTSCHRIFT

(11) **EP 1 285 866 B1**
(45) Veröffentlichungstag und Bekanntmachung des Hinweises auf die Patenterteilung: **02.03.2005**
(21) Anmeldenummer: 02018720.9
(22) Anmeldetag: 21.08.2002
(51) Int. Cl.: B65G 1/04

(54) **Regallager für quaderförmige Behälter, insbesondere Standardkisten**
Shelf storage for quadrangular boxes ,such as standardized boxes
Magasin à rayonnage pour boItes rectangulaires en particulier des boItes à dimensions standardisées

(30) Priorität: 23.08.2001 DE 10142838
(43) Veröffentlichungstag der Anmeldung: 26.02.2003
(73) Patentinhaber: KHT Kommissioner- und Handhabungstechnik GmbH, 45881 Gelsenkirchen (DE)
(72) Erfinder: Von Schneidemesser, Christian, 45133 Essen (DE)
(74) Vertreter: Berg, Peter, Dipl.-Ing.

(56) Entgegenhaltungen:
- EP-A- 0 733 563
- DE-A- 4 228 809
- DE-A- 19 613 707
- DE-C- 3 324 349
- FR-A- 2 115 486

## Beschreibung

Die Erfindung betrifft ein Regallager für quaderförmige Behälter, insbesondere Standardkisten, gemäß dem Oberbegriff des Anspruchs 1.

Aus der DE 198 17 935 A1 ist bereits eine Ein- und Auslagerungsvorrichtung mit einer Greifeinheit bekannt, die zur Ein- und Auslagerung von quaderförmigen Behältern in ein Regallager verwendet wird. Die Greifeinheit verfügt über zwei parallele Greifplatten, die in einer horizontalen Ebene in zueinander parallel verlaufenden Längsführungen geführt sind. Die Greifplatten sind beidseitig neben die Seitenflächen des Behälters synchron verfahrbar. Zum Greifen werden die Längsführungen quer zur Ein-/Auslagerrichtung synchron gegeneinander bewegt, wobei die Greifplatten kraftbeaufschlagt an die jeweils gegenüberliegende Seitenfläche des Behälters angelegt werden. Die Abstützung der Greifplatten erfolgt über die Längsführungen an der Einund Auslagerungsvorrichtung. Um beidseitig eines Gangs die einander gegenüberliegend angeordneten Regale bedienen zu können, sind die Greifplatten über die Führungen in beide Einlagerrichtungen - also in entgegengesetzten Richtungen - soweit einfahrbar, dass die Behälter beider Regale im Randbereich gegriffen werden können.

Weiter ist aus der DE 196 13 707 A1 eine Greifvorrichtung bekannt, bei der schwertförmig ausgebildete, in Längsführungen geführte Greifer beidseitig neben den zu greifenden Behälter verfahrbar sind. Zum Greifen werden die Greifer gegenläufig zueinander gegen die Seitenflächen des Behälters geschwenkt. Die Greifelemente sind am Umfang einer angetriebenen endlos umlaufenden Kette befestigt, wobei die Kette den Behälter und beide Greifer gleichzeitig aus dem Regal zieht. Die vorgenannten Klemmgreifer sind für eine doppeltiefe Einlagerung von Behältern nicht vorgesehen.

Eine derartige Einrichtung ist in der DE-A-4 228 809 beschrieben, wobei U-förmige Führungen ineinander verschachtelt oder auseinander gezogen sein Können. Durch die U-Form der Führungen ist die Längsseitige Beweglichkeit des Greifers jedoch begrenzt.

Die Aufgabe der Erfindung ist es, ein Regallager mit einer Ein- und Auslagerungsvorrichtung vorzuschlagen, bei dem zumindest jeweils zwei Behälter in einer Reihe hintereinanderliegend ablegbar sind. Dabei sollen die einzelnen Behälterreihen einen kleinstmöglichen Abstand voneinander haben, um den Lagerraum des Regallagers maximal ausnutzen zu können.

Die Lösung dieser Aufgabe ist durch die im Anspruch 1 angegebenen Merkmale gegeben. Durch die kennzeichnenden Merkmale der Unteransprüche ist das Regallager in vorteilhafter Weise weiter ausgestaltet.

Die Lösung sieht vor, dass die Ein- und Auslagerungsvorrichtung feststehende Führungen für zwei einund ausfahrbare hochstehende schmale Seitenplatten aufweist, die parallel verlaufend an ihren dem Regal zugewandten Enden über die Greifeinheit starr miteinander verbunden sind, die selbst längs der Seitenplatten zusammen mit diesen oder unabhängig von diesen verfahrbar ist, wobei die beiden Seitenplatten mit der Greifeinheit und den Führungen in jeder Ausfahrposition einen Rahmen bilden, so dass die Greifeinheit mittels der Seitenplatten an einem Rahmen in Ein-/Auslagerrichtung verfahrbar ist, und dass die Ein- und Auslagerungsvorrichtung quer zur Ein-/Auslagerrichtung verschwenkbar ist, um die beiden zum Gang gehörenden Regalseiten bedienen zu können. Der Rahmen ermöglicht die Verwendung von kurzen Führungen und schmalen Seitenplatten. Der Behälter befindet sich nach dem Herausziehen aus dem Regal auf der Auflagefläche der Ein- und Auslagerungsvorrichtung, und zwar zwischen den zurückgefahrenen Seitenplatten und den Führungen; die Einund Ausgangsvorrichtung hat aufgrund der schmalen Seitenplatten und - da die Führungen nicht nur kurz sondern ebenfalls schmal gehalten werden können - eine geringe Querausdehnung. Es wird folglich eine schmalbauende Ein- und Auslagerungsvorrichtung erzielt, die durch Verschwenken in der Auflagefläche auch das jeweils gegenüberliegende Regal bedienen kann.

Zur Ein-/Auslagerung einer Behälterreihe sind mittels der ausfahrbaren Seitenplatten mindestens zwei Tiefenpositionen im Regal anfahrbar.

Zur Sicherstellung eines einwandfreien Greifens umfasst die Greifeinheit zwei einander zugewandte Greifplatten, welche synchron aufeinander zu- und voneinander wegbewegbar sind und durch die ein auf der Auflagefläche oder der Lagerfläche liegender Behälter seitlich greifbar ist.

Der Einlagerungsvorgang vereinfacht sich, wenn die Greifeinheit mindestens ein Schiebeelement aufweist, um einen Behälter von der Auflagefläche auf eine Lagerfläche ins Regal zu schieben.

Zur besseren Ausrichtung des mittels Schiebeelement ins Regal zu schiebenden Behälters wird dieser vorher kurzzeitig klemmgegriffen.

Eine konstruktiv einfache Lösung sieht vor, dass jede Greifplatte ein Schiebeelement aufweist.

Im einfachsten Fall bilden die Greifplatte und das Schiebelement ein Winkelelement.

Die Sicherheit des Greifens erhöht sich, wenn die Greifer zusätzlich einen Sauger umfasst.

Alternativ zum Klemmen kann die Greifeinheit eine Gabel zum Anheben des Behälters umfassen.

Um Fehlfunktionen zu vermeiden, ist die Ein- und Auslagerungsvorrichtung mit Sensoren versehen, mit denen die Belegung der gegenüberliegenden Lagerfläche festgestellt werden kann.

Um die Anpassbarkeit der Greifeinheit zu verbessern, ist diese modulartig auswechselbar zu gestalten.

Ein Ausführungsbeispiel der Erfindung ist in der Zeichnung dargestellt und wird nachfolgend näher beschrieben. Es zeigen:
- Fig. 1: eine Ein- und Auslagerungsvorrichtung mit einem einzulagernden Behälter vor einer Lagerfläche eines Regals,
- Fig. 2: die Ein- und Auslagerungsvorrichtung gemäß Fig. 1 in einer Draufsicht,
- Fig. 3: die Ein- und Auslagerungsvorrichtung gemäß Fig. 1 in einer vergrößerten Darstellung ohne Behälter,
- Fig. 4: die Ein- und Auslagerungsvorrichtung gemäß Fig. 1 mit einem auf die Lagerfläche aufgeschobenem Behälter in der vorderen Lagerposition,
- Fig. 5: die Ein- und Auslagerungsvorrichtung gemäß Fig. 4 in einer Draufsicht,
- Fig. 6: die Ein- und Auslagerungsvorrichtung gemäß Fig. 1 mit dem Behälter in der hinteren Lagerposition,
- Fig. 7: die Ein- und Auslagerungsvorrichtung gemäß Fig. 6 in einer Draufsicht,

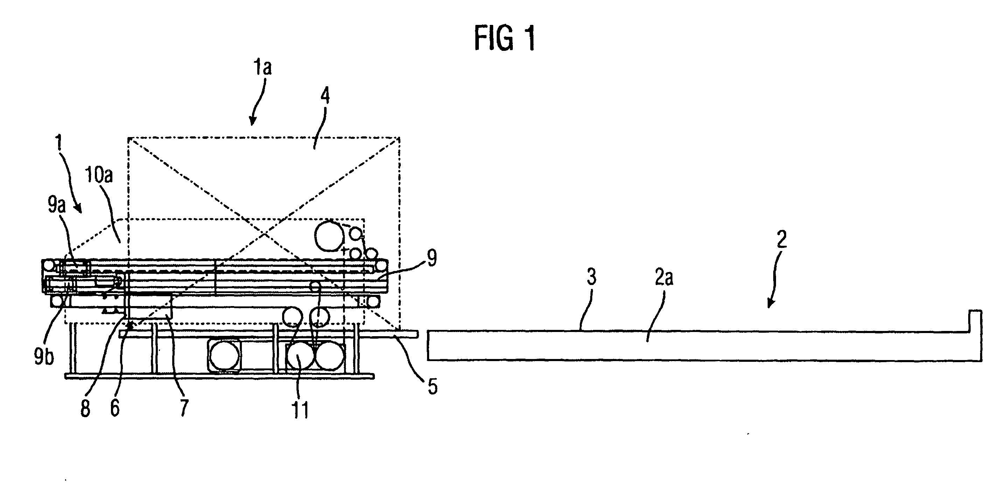

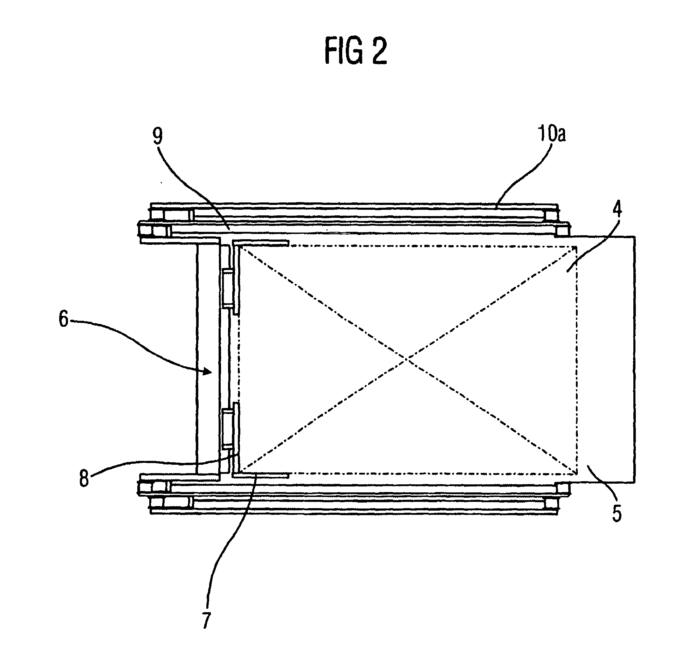

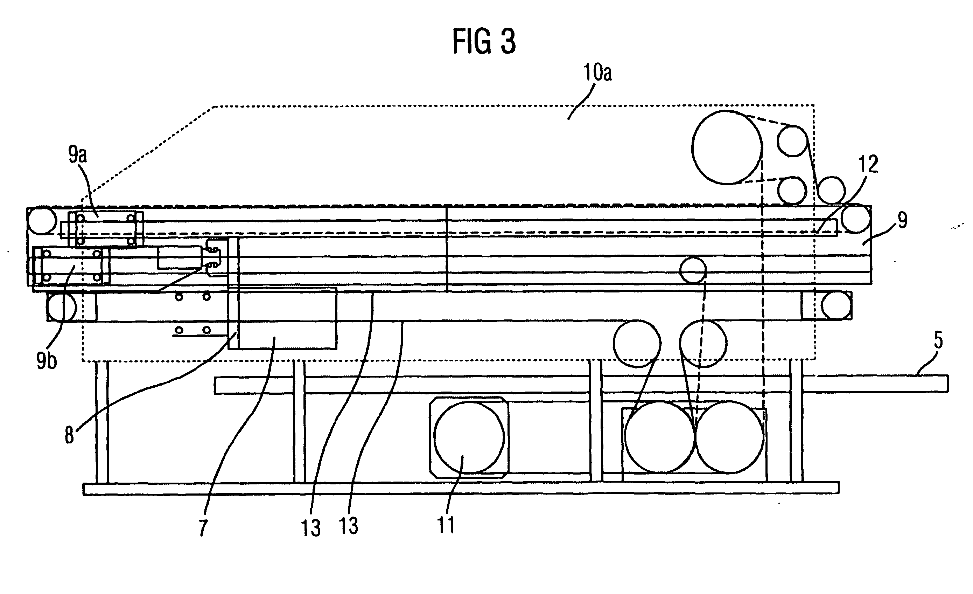

Fig. 1 zeigt eine Ein- und Auslagerungsvorrichtung 1, die in einem Gang 1a verfahrbar ist, zwischen zwei einander gegenüberliegenden Regalen 2 eines Regallagers, die eine Vielzahl von horizontal übereinander angeordneten Regalböden 2a mit Lagerflächen 3 aufweisen. Die an sich bekannten Regale 2 sind in Fig. 1 nur schematisch in Form eines einzigen Regalbodens 2a mit seiner Lagerfläche 3 dargestellt. Auf jeder Lagerfläche 3 sind im Ausführungsbeispiel bis zu zwei quaderförmige Behälter 4 in einer Reihe hintereinanderliegend ablegbar, jeweils zueinander mittig ausgerichtet. Die Fachbreite für jede Behälterreihe ist jeweils gleich. Bei den nur schematisch dargestellten Behältern 4 handelt es sich z.B. um Standardkisten gleicher Größe. Die Ein- und Auslagerungsvorrichtung 1 ist zum Anfahren der gewünschten Lagerfläche 3 auf- und abbewegbar. Fig. 2 zeigt die Ein- und Auslagerungsvorrichtung 1 gemäß Fig. 1 in einer Draufsicht, Fig. 3 in einer vergrößerten Darstellung ohne Behälter 4.

In Fig. 1 befindet sich ein einzelner Behälter 4 auf der Einund Auslagerungsvorrichtung 1 auf einer Auflagefläche 5, die - in Fig. 1 - dieselbe Höhe wie die gegenüberliegende Lagerfläche 3 aufweist.

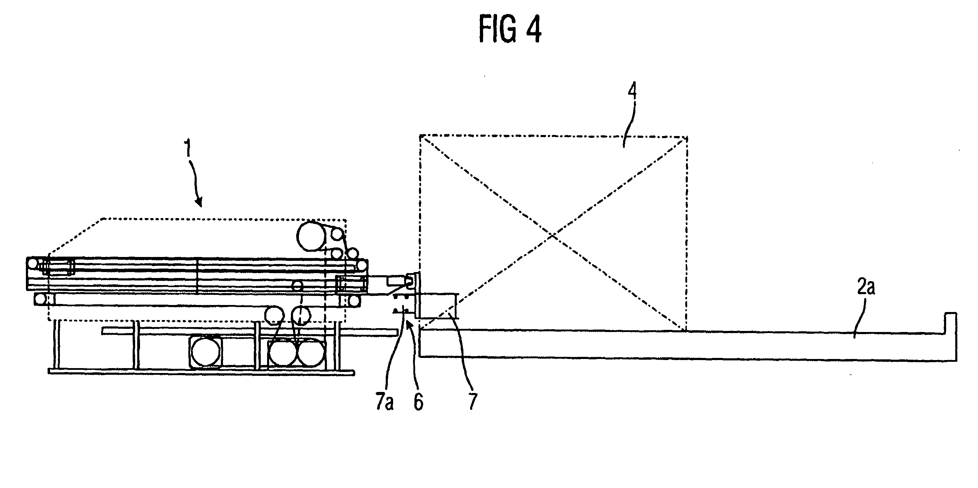

Zum Bewegen des Behälters 4 ist eine Greifeinheit 6 vorgesehen, die zwei einander zugewandte Greifplatten 7 aufweist, welche mittels eines Antriebs 7a (Fig. 4) gegenläufig aufeinander zu- und voneinander wegbewegbar sind. Mit den Greifplatten 7 werden die Behälter 4 im Bereich des Behälterbodens seitlich gegriffen und von der Lagerfläche 3 gezogen.

Zum Aufschieben des Behälters 4 auf die Lagerfläche 3 werden die Greifplatten 7 ebenfalls kurzzeitig in ihre Klemmstellung gebracht, also seitlich an den Behälter 4 angelegt, allerdings nur, um den Behälter 4 auszurichten, und dann wieder etwas geöffnet. Die Greifeinheit 6 weist zum Aufschieben des Behälters 4 ein Schiebeelement 8 auf, das in Form einer Platte an jeder Greifplatte 7 quer zu dieser angeordnet ist; die Greifplatte 7 und das Schiebeelement 8 bilden jeweils ein rechtwinkliges Winkelelement. In Fig. 2 sind die Greifplatten 7 zur Ausrichtung des Behälters 4 beidseitig anliegend gezeigt.

Wie Fig. 2 erkennen lässt, befindet sich die modulartig auswechselbare Greifeinheit 6 zwischen den vorderen Enden von zwei ausfahrbaren hochstehenden schmalen Seitenplatten 9. Die Seitenplatten 9 sind über Schlitten 9a in Führungen 10 geführt, die jeweils an einem ebenfalls schmalen auf der Einund Auslagerungsvorrichtung 1 fest angeordneten Längsträger 10a ausgebildet sind. Beide Seitenplatten 9 verlaufen parallel zueinander und sind über die Greifeinheit 6 an den Enden starr miteinander verbunden. Die Greifeinheit 6 selbst ist in Ein-/Auslagerrichtung, also in Seitenplattenlängsrichtung zwischen zwei Endstellungen mittels Schlitten 9b verfahrbar. Fig. 1, 2, 3 zeigen die Greifeinheit 6 in ihrer hinteren Endstellung.

Angetrieben werden die beiden Schlitten 9a, 9b von einem gemeinsamen Antrieb 11 mittels Riemen 12 (Schlitten 9a) und 13 (Schlitten 9b).

Aus Fig. 2 ist entnehmbar, dass sich der Behälter 4 auf der Auflagefläche 5 jeweils zwischen den Seitenplatten 9 befindet.

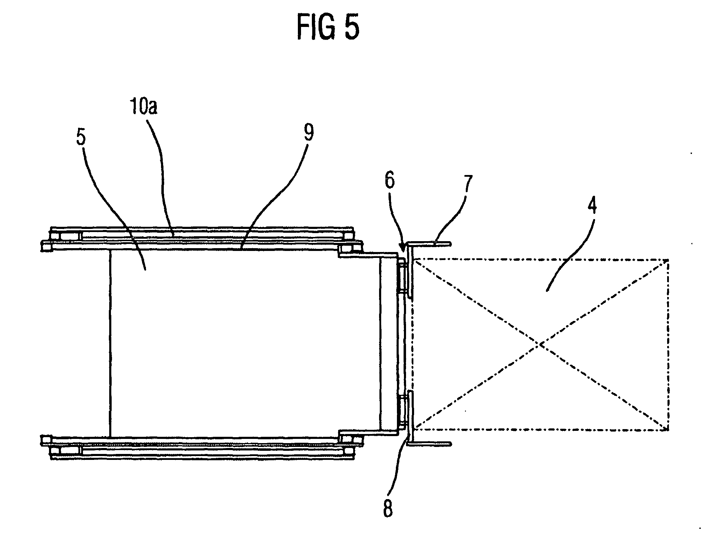

Fig. 4 zeigt die Greifeinheit 6 in ihrer vorderen Endstellung: Der Behälter 4 befindet sich in der vorderen Lagerposition auf der Lagerfläche 3 im Regal 2, die Seitenplatten 9 sind noch nicht ausgefahren. In Fig. 5 ist die Ein- und Auslagerungsvorrichtung 1 gemäß Fig. 4 in einer Draufsicht gezeigt.

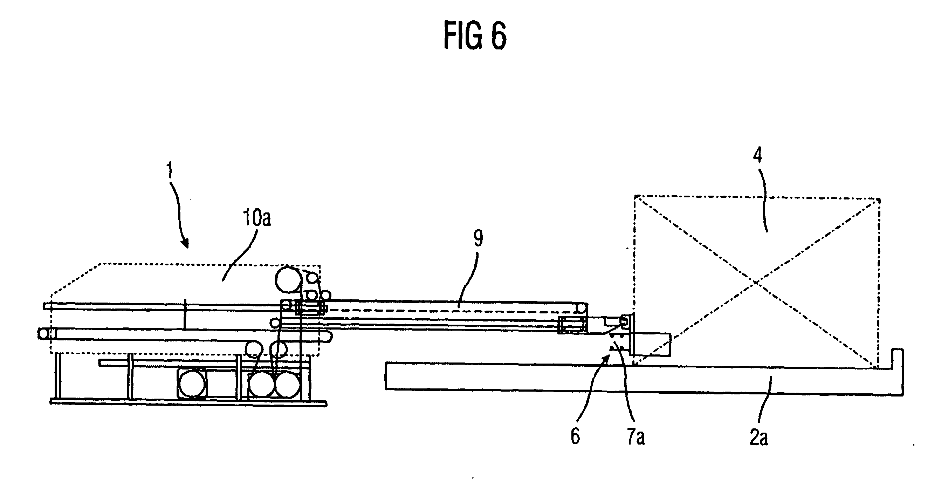

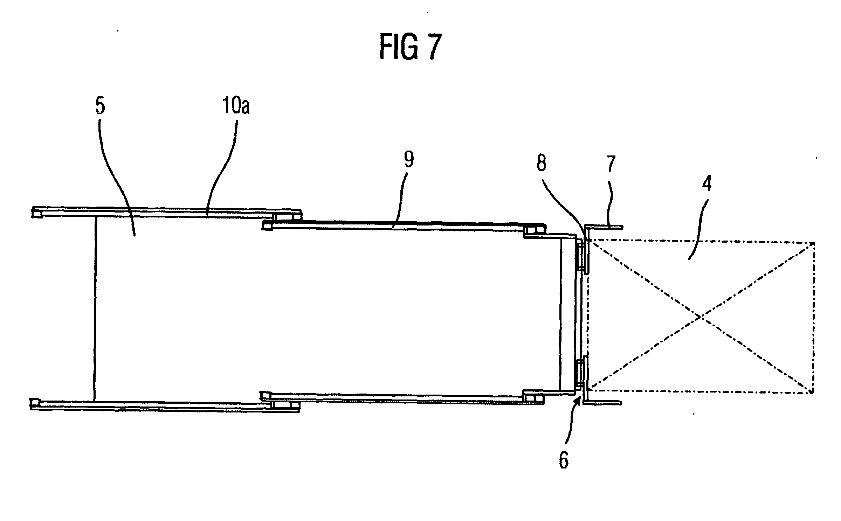

Fig. 6 zeigt die Ein- und Auslagerungsvorrichtung 1 gemäß Fig. 1 mit ausgefahrenen Seitenplatten 9 und den Behälter 4 in der hinteren Lagerposition, Fig. 7 die zugehörige Draufsicht. Durch das zusätzliche Ausfahren der Seitenplatten 9 wird der Behälter 4 gegenüber der Position in Fig. 4 in seine hintere Ablageposition geschoben. Selbstverständlich kann das Verfahren der Greifeinheit 6 und der Seitenplatten 9 gemeinsam oder unabhängig voneinander, also auch nacheinander erfolgen.

Neben der starren Verbindung der Seitenplatten 9 über die Greifeinheit 6 sind diese über die Führungen 10 an der Einund Auslagerungsvorrichtung 1 abgestützt. Die Seitenplatten 9 bilden zusammen mit der Greifeinheit 6 und den Führungen 10, d.h. der Ein- und Auslagerungsvorrichtung 1, einen starren Rahmen. Die Greifeinheit 6 ist also quasi an einem starren Rahmen in Ein-/Auslagerrichtung verfahrbar. Die Ausbildung des starren Rahmens ermöglicht es, die Ein- und Auslagerungsvorrichtung 1 sehr schmal zu bauen und außerdem kurze Längsträger 10a zu verwenden. Ein starrer Rahmen liegt bei jeder Ausfahrposition der Seitenplatten 9 vor.

Zur Bedienung beider Regale ist die Ein- und Auslagerungsvorrichtung um 180 Grad verschwenkbar; es kann auch eine Verschwenkung um 360 Grad vorgesehen sein. Die Verschwenkung erfolgt quer zur Ein-/Auslagerrichtung in einer horizontalen Ebene parallel zur Auflagefläche 5. Die dabei überstrichene Fläche ist in den Draufsichten (Fig. 4, 5, 6) als gestrichelter Kreis gezeichnet.

Die Greifeinheit 6 kann zusätzlich mit einem Sauger ausgerüstet sein; es ist auch möglich, eine Gabel zum Anheben der Behälter 4 vorzusehen.

Um Fehlfunktionen zu vermeiden, ist die Ein- und Auslagerungsvorrichtung 1 mit nichtgezeigten Sensoren versehen, mit denen die Belegung der gegenüberliegenden Lagerfläche 3 sicher festgestellt werden kann.

## Patentansprüche

1. Regallager für quaderförmige Behälter (4), insbesondere Standardkisten,
mit zwei unter Belassung eines Gangs (1a) einander gegenüberliegenden Regalen (2) mit einer Vielzahl von übereinander angeordneten Lagerflächen (3), auf denen nebeneinander in Einlagerrichtung gesehen jeweils mehrere mittig zueinander ausgerichtete Behälter (4) in einer Reihe hintereinanderliegend ablegbar sind,
mit einer entlang des Gangs (1a) verfahrbaren auf- und abbewegbaren Ein- und Auslagerungsvorrichtung (1), die eine Auflagefläche (5) für einen Behälter (4) und eine Greifeinheit (6) mit Greifern (7) umfasst, durch welche ein Behälter (4) zumindest seitlich klemmgreifbar und zumindest von der Lagerfläche (3) auf die Auflagefläche (5) ziehbar ist, **dadurch gekennzeichnet,**
**dass** an der Ein- und Auslagerungsvorrichtung (1) feststehende Führungen (10) für zwei ein- und ausfahrbare hochstehende Seitenplatten (9) angeordnet sind, die quer zum Gang parallel zueinander verlaufen und durch eine Querverbindung miteinander verbunden sind,
wobei die Querverbindung längs der Seitenplatten (9) unabhängig von diesen verfahrbar ist und
wobei die Führungen (10), die beiden Seitenplatten (9) und die Querverbindung in jeder Ausfahrposition einen Rahmen bilden, dass die Greifer (7) an der Querverbindung des Rahmens angeordnet und gegenläufig zueinander bewegbar sind, dass je ein Behälter (4) von der Greifeinheit (6) zwischen die Seitenplatten (9) ziehbar ist, und
**dass** die Ein- und Auslagerungsvorrichtung (1) quer zur Ein/Auslagerrichtung verschwenkbar ist, um die beiden zum Gang (1a) gehörenden Regalseiten bedienen zu können.

2. Regallager nach Anspruch 1,
**dadurch gekennzeichnet,**
**dass** mittels der Seitenplatten (9) mindestens zwei Tiefenpositionen im Regal (2) anfahrbar sind.

3. Regallager nach einem der vorhergehenden Ansprüche,
**dadurch gekennzeichnet,**
**dass** die Greifeinheit (6) zwei einander zugewandte Greifplatten (7) umfasst, welche synchron aufeinander zu- und voneinander wegbewegbar sind und durch die ein auf der Auflagefläche (5) oder der Lagerfläche (3) liegender Behälter (4) seitlich greifbar ist.

4. Regallager nach einem der vorhergehenden Ansprüche,
**dadurch gekennzeichnet,**
**dass** die Greifeinheit (6) mindestens ein Schiebeelement (8) aufweist, um einen Behälter (4) von der Auflagefläche (5) auf eine Lagerfläche (3) ins Regal (2) zu schieben.

5. Regallager nach Anspruch 4,
**dadurch gekennzeichnet,**
**dass** der Behälter (4) zur Ausrichtung vorher klemmgreifbar ist.

6. Regallager nach Anspruch 4 oder 5,
**dadurch gekennzeichnet,**
**dass** jede Greifplatte (7) ein Schiebeelement (8) aufweist.

7. Regallager nach einem der Ansprüche 4 - 6,
**dadurch gekennzeichnet,**
**dass** die Greifplatte (7) und das Schiebeelement (8) ein Winkelelement bilden.

8. Regallager nach einem der vorhergehenden Ansprüche,
**dadurch gekennzeichnet,**
**dass** die Greifeinheit (6) zusätzlich einen Sauger umfasst.

9. Regallager nach einem der vorhergehenden Ansprüche,
**dadurch gekennzeichnet,**
**dass** die Greifeinheit (6) eine Gabel zum Anheben der Behälter (4) umfasst.

10. Regallager nach einem der vorhergehenden Ansprüche,
**dadurch gekennzeichnet,**
**dass** die Ein- und Auslagerungsvorrichtung (1) mit Sensoren versehen ist, um die Belegung der gegenüberliegenden Lagerfläche (3) feststellen zu können.

11. Regallager nach einem der vorhergehenden Ansprüche,
**dadurch gekennzeichnet,**
**dass** die Greifeinheit (6) modulartig auswechselbar ist.

## Claims

1. Shelf store for cuboid containers (4), especially standard cases,
having two shelves (2) situated opposite each other, leaving a gangway (1a), and having a multiplicity of storage surfaces (3) disposed one above the other, on which, side by side, viewed in the stock delivery direction, a plurality of containers (4) centrally aligned one to the other can respectively be deposited lying one behind the other in a row,
having a stock delivery and stock removal apparatus (1), which can be moved up and down and is transportable along the gangway (1a) and comprises a bearing surface (5) for a container (4) and a grabbing unit (6) having grabs (7), by which a container (4) can be clamped at least laterally and can be pulled at least from the storage surface (3) onto the bearing surface (5),
**characterized in that** on the stock delivery and stock removal apparatus (1) there are disposed fixed guides (10) for two retractable and extensible upright side plates (9), which run parallel to each other transversely to the gangway and are connected to each other by a transverse connection, the transverse connection being transportable along the side plates (9) independently from these and the guides (10), the two side plates (9) and the transverse connection, in every extension position, forming a frame, **in that** the grabs (7) are disposed on the transverse connection of the frame and can be moved in opposite directions, **in that** one container (4) at a time can be pulled between the side plates (9) by the grabbing unit (6), and **in that** the stock delivery and stock removal apparatus (1) can be pivoted transversely to the stock delivery/stock removal direction in order to be able to serve the two shelf sides belonging to the gangway (1a).

2. Shelf store according to Claim 1, **characterized in that** at least two depth positions in the shelf (2) can be reached by means of the side plates (9).

3. Shelf store according to one of the preceding claims, **characterized in that** the grabbing unit (6) comprises two mutually facing grab plates (7), which can be moved synchronously together and apart and by which a container (4) situated on the bearing surface (5) or the storage surface (3) can be grabbed from the side.

4. Shelf store according to one of the preceding claims, **characterized in that** the grabbing unit (6) has at least one pushing element (8) in order to push a container (4) from the bearing surface (5) onto a storage surface (3) into the shelf (2).

5. Shelf store according to Claim 4, **characterized in that** the container (4) can be previously held clamped for the purposes of alignment.

6. Shelf store according to Claim 4 or 5, **characterized in that** each grab plate (7) has a pushing element (8).

7. Shelf store according to one of Claims 4 - 6, **characterized in that** the grab plate (7) and the pushing element (8) form an angle element.

8. Shelf store according to one of the preceding claims, **characterized in that** the grabbing unit (6) additionally comprises a suction pad.

9. Shelf store according to one of the preceding claims, **characterized in that** the grabbing unit (6) comprises a fork for raising the containers (4) .

10. Shelf store according to one of the preceding claims, **characterized in that** the stock delivery and stock removal apparatus (1) is provided with sensors in order to be able to determine the occupancy of the opposite storage surface (3).

11. Shelf store according to one of the preceding claims, **characterized in that** the grabbing unit (6) is modularly exchangeable.

## Revendications

1. Dispositif de stockage à rayonnage pour des caisses (4) parallélépipédiques, notamment des boîtes normalisées,
comportant deux rayonnages (2) se faisant face en laissant un passage (1a) et ayant une pluralité de surfaces (3) de stockage superposées sur lesquelles peuvent être déposées, côte à côte vu dans la direction d'insertion, les unes derrière les autres en une rangée plusieurs caisses (4) orientées les unes vers les autres par leur milieu,
comportant un dispositif (1) de stockage et de déstockage, qui se déplace le long du passage (1a) et qui peut être abaissé et relevé et qui comprend une surface (5) de support pour une caisse (4), et une unité (6) de préhension comportant des grappins (7), par lesquels une caisse (4) peut être prise par serrage au moins latéralement et tirée au moins de la surface (3) de stockage à la surface (5) de support,
**caractérisé en ce que**
il est disposé sur le dispositif (1) de stockage et de déstockage des dispositifs (10) de guidage fixes pour deux plaques (9) latérales sur chant qui peuvent être entrées et sorties, qui s'étendent parallèlement l'une à l'autre, perpendiculairement au passage, et qui sont reliées l'une à l'autre par une liaison transversale,
la liaison transversale pouvant être déplacée le long des plaques (9) latérales indépendamment de celles-ci et
les dispositifs (10) de guidage, les deux plaques (9) latérales et la liaison transversale formant en chaque position de sortie un cadre,
**en ce que** les grappins (7) sont disposés sur la liaison transversale du cadre et peuvent être déplacés en sens opposé les uns par rapport aux autres, **en ce que** chaque caisse (4) peut être tirée par l'unité (6) de préhension entre les plaques (9) latérales, et
**en ce que** le dispositif de stockage et de déstockage peut être basculé transversalement à la direction de stockage/déstockage afin de pouvoir garnir les deux côtés de rayonnage faisant partie du passage (1a).

2. Dispositif de stockage à rayonnage suivant la revendication 1,
**caractérisé**
**en ce que** l'on peut atteindre au moyen des plaques (9) latérales au moins deux positions en profondeur dans le rayonnage (2).

3. Dispositif de stockage à rayonnage suivant l'une des revendications précédentes,
**caractérisé**
**en ce que** l'unité (6) de préhension comporte deux plaques (7) de préhension tournées l'une vers l'autre, qui peuvent être approchées et éloignées l'une de l'autre de manière synchrone et par lesquelles une caisse (4) se trouvant sur la surface (5) de support ou la surface (3) de stockage peut être prise latéralement.

4. Dispositif de stockage à rayonnage suivant l'une des revendications précédentes,
**caractérisé**
**en ce que** l'unité (6) de préhension comporte au moins un élément (8) coulissant pour repousser une caisse (4) de la surface (5) de support sur une surface (3) de stockage dans le rayonnage (2).

5. Dispositif de stockage à rayonnage suivant la revendication 4,
**caractérisé**
**en ce que** la caisse (4) peut être prise auparavant par serrage pour être orientée.

6. Dispositif de stockage à rayonnage suivant la revendication 4 ou 5,
**caractérisé**
**en ce que** chaque plaque (7) de préhension comporte un élément (8) coulissant.

7. Dispositif de stockage à rayonnage suivant l'une des revendications 4 à 6,
**caractérisé**
**en ce que** la plaque (7) de préhension et l'élément (8) coulissant forment un élément en équerre.

8. Dispositif de stockage à rayonnage suivant l'une des revendications précédentes,
**caractérisé**
**en ce que** l'unité (6) de préhension comprend de plus un aspirateur.

9. Dispositif de stockage à rayonnage suivant l'une des revendications précédentes,
**caractérisé**
**en ce que** l'unité (6) de préhension comprend une fourche pour soulever la caisse (4).

10. Dispositif de stockage à rayonnage suivant l'une des revendications précédentes,
**caractérisé**
**en ce que** le dispositif de stockage et de déstockage est muni de détecteurs afin de pouvoir constater l'occupation des surfaces (3) de support qui se font face.

11. Dispositif de stockage à rayonnage suivant l'une des revendications précédentes,
**caractérisé**
**en ce que** l'unité (6) de préhension peut être remplacée de manière modulaire.
